# EUROPÄISCHE PATENTANMELDUNG

(11) **EP 2 048 446 A1**
(43) Veröffentlichungstag der Anmeldung: **15.04.2009**
(21) Anmeldenummer: 08162973.5
(22) Anmeldetag: 26.08.2008
(51) Int. Cl.: F24D 3/14

(54) **Vorrichtung zum Eintreiben von Haltern für ein Flächenheizungsrohr, insbesondere Fußbodenheizungsrohr in eine Wärmedämmschicht**

(30) Priorität: 13.09.2007 DE 102007043708
(71) Anmelder: Uponor Innovation AB, 513 81 Fristad (SE)
(72) Erfinder: Gillig, Thomas, 97246 Eibelstadt (DE); Vogel, Thomas, 97357 Prichsenstadt (DE); Geithe, Oliver, 96049 Bamberg (DE); Dellwig, Stefan, 22415 Hamburg (DE)
(74) Vertreter: Hilleringmann, Jochen

(57) **Zusammenfassung**

Die Vorrichtung zum Eintreiben von Halten für ein Flächenheizungsrohr, insbesondere Fußbodenheizungsrohr in eine Wärmedämmschicht weist ein Stößelelement (16) zum Eintreiben eines Rohrhalters (28) in die Wärmedämmschicht (30), ein Auslöseelement (20) zur Aktivierung des Stößelelements (16) mit einem Fuß und ein Magazin (32) für Rohrhalter (28) auf. Ferner weist die Vorrichtung ein Montageelement (12), an dem das Stößelelement (16) geführt ist und das Auslöseelement (20) sowie das Magazin (32) angeordnet sind und das ein Rohrführungselement (38) zum Führen des Montageelements (12) an einem zu verlegenden Rohr (40) aufweist, und ein mit dem Montageelement (12) lösbar verbindbaren oder an dem Montageelement (12) angeordneten Schuhhalteelement (34) zum Halten des Montageelements (12) an einem Schuh (36) einer Person auf.

## Beschreibung

Die Erfindung betrifft eine Vorrichtung zum Eintreiben von Haltern für ein Flächenheizungsrohr, insbesondere Fußbodenheizungsrohr in eine Wärmedämmschicht.

Derartige Vorrichtungen sind beispielsweise aus DE 198 61 052 A1, DE 87 06 929 U1 und DE 80 28 367 U1 bekannt. Die bekannten Geräte weisen ein Gehäuse oder ein Montageelement auf, an dem die verschiedenen Teile und Elemente des Tackers gehalten, geführt oder befestigt sind. Die bekannten Tackergeräte verfügen über ein Magazin für Rohrhalter. Bei diesen Rohrhaltern handelt es sich im wesentlichen um krampenartige Elemente mit Widerhaken. Derartige Rohrhalter sind z.B. aus DE 298 12 237 U1 bekannt. Zum Eintreiben der Rohrhalter dient ein Stößel, der mit Hilfe eines Auslöseelements aktiviert wird, um einen Rohrhalter in eine Wärmedämmschicht hineinzutreiben.

Die bekannten Tackergeräte erfordern eine Zwei-Hand-Bedienung, wobei das Gerät mit der einen Hand gehalten und mit der anderen Hand bedient wird. Eine weitere Person ist bei der Rohrverlegung erforderlich, um das zu verlegende Rohr zu führen und zu halten. Dies erhöht die Kosten für die Montage einer Flächenheizung.

Aus DE 198 06 166 A1 ist es ferner bekannt, zuvor an einem Rohr fixierte krampenartige Befestigungselemente beim Verlegen des Rohres in einen Wärme- und/oder Trittschalldämmungsuntergrund mit den Füßen hineinzutreiben, indem das auf dem Untergrund liegende Rohr mit dem Fuß gegen den Untergrund gedrückt wird.

Aufgabe der Erfindung ist es, eine Vorrichtung zum Eintreiben von Haltern für ein Flächenheizungsrohr, insbesondere Fußbodenheizungsrohr in eine Wärmedämmschicht zu schaffen, die die Betätigung und die Verlegung des Rohres durch eine einzige Person ermöglicht.

Zur Lösung dieser Aufgabe wird mit der Erfindung eine Vorrichtung zum Eintreiben von Haltern für ein Flächenheizungsrohr, insbesondere Fußbodenheizungsrohr in eine Wärmedämmschicht vorgeschlagen, wobei die Vorrichtung versehen ist mit den Merkmalen des Anspruchs 1.

Erfindungsgemäß lässt sich die Vorrichtung an einem Schuh befestigen und durch den Schuh bzw. den Fuß einer Person führen. Hierzu weist die Vorrichtung ein Schuhhalteelement auf, das mit der Vorrichtung bzw. dem Montageelement lösbar verbindbar oder an der Vorrichtung bzw. dem Montageelement befestigt ist. Durch das Führen und Halten sowie Ausrichten der Vorrichtung mit dem Schuh bzw. Fuß hat die die Vorrichtung bedienende Person nunmehr beide Hände frei, um zum einen das zu verlegende Rohr zu führen und/oder zum anderen die Vorrichtung zu betätigen, d.h. ihr Auslöseelement zu bedienen.

Zweckmäßigerweise ist das Auslöseelement als Fußpedal zur Betätigung mittels des anderen Schuh bzw. anderen Fußes der die Vorrichtung bedienenden Person ausgebildet. Alternativ ist es auch möglich, das Auslöseelement mittels desjenigen Schuhs bzw. Fußes der Person zu betätigen, der das Montageelement hält. Der Schuh übernimmt also zwei Funktionen, nämlich zum einen die Flalterung/Führung der Vorrichtung und zum anderen die Auslösung/ Bedienung der Vorrichtung.

Grundsätzlich kann die erfindungsgemäße Vorrichtung mit den von Tackergeräten her bekannten Auslösemechanismen versehen sein. Hier existieren sowohl mechanische Systeme als auch automatische Antriebsvorrichtungen für den Stößel. So ist es beispielsweise möglich, eine automatische Antriebseinheit in Form einer elektrischen, pneumatischen oder mit Federkraft arbeitenden Einheit vorzusehen. Das Auslöseelement kann mit dem Stößel verbunden oder mechanisch gekoppelt sein, um durch Betätigen des Auslöseelements den Stößel zwecks Eintreibens des Rohrhalters in die Wärmedämmschicht zu bewegen, wobei sich der Stößel bei Freigabe des Auslöseelements vorzugsweise selbsttätig wieder in seine Ausgangsposition zurückbewegt, was vorzugsweise über eine Feder o.dgl. rückstellfähigen Element erfolgt.

In vorteilhafter Weiterbildung der Erfindung ist vorgesehen, dass die Vorrichtung ferner mit einem Rohrführungselement versehen ist, das auf das zu fixierende Rohr aufgesetzt wird, bevor der Stößel den Rohrhalter zur Fixierung auf der Wärmedämmschicht in diese hineintreibt. Das Rohrführungselement ist zweckmäßigerweise an der Unterseite des Montageelements angeordnet und liegt bei der Bedienung der Vorrichtung unter Führung des Rohres auf der Wärmedämmschicht auf.

Die Erfindung wird nachfolgend anhand zweier Ausführungsbeispiele und unter Bezugnahme auf die Zeichnung näher erläutert. Im einzelnen zeigen dabei:
- Fig. 1: eine perspektivische Seitenansicht auf ein Fuß-Tackergerät gemäß einem ersten Ausführungsbeispiel,
- Fig. 2: eine Unteransicht des Fuß-Tackergeräts gemäß Fig. 1 in Richtung des Pfeils II und
- Fig. 3: eine perspektivische Seitenansicht eines Fuß-Tackergeräts gemäß einem zweiten Ausführungsbeispiel.

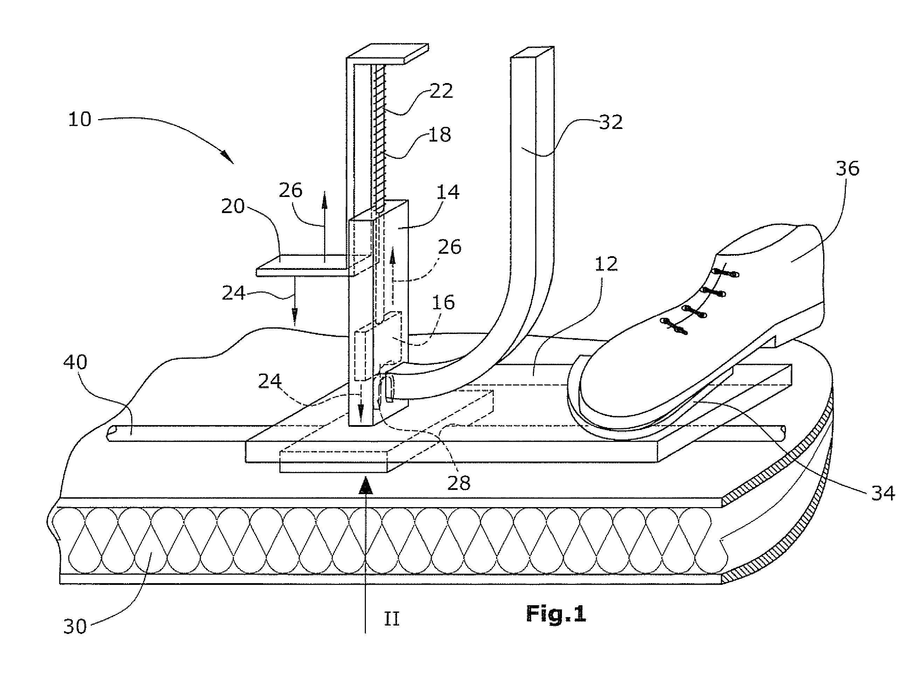

In Fig. 1 ist eine mit den Füßen zu führende bzw. zu haltende und zu betätigende Vorrichtung 10 zum Eintreiben von Haltern für ein Flächenheizungsrohr, insbesondere Fußbodenheizungsrohr in eine Wärmedämmschicht gezeigt. Die Vorrichtung 10 (nachfolgend auch Tackergerät genannt) umfasst eine Basis- oder Montageplatte 12, von der ein Führungselement 14 zum Führen eines auf- und abwärts bewegbaren Stößelelements 16 aufragt. Das Stößelelement 16 befindet sich an einer Stößelstange 18, die oben aus dem Führungselement 14 herausragt und an der ein Auslöseelement 20 in Form eines in diesem Ausführungsbeispiel ebenfalls am Führungselement 14 geführten Fußpedals befestigt ist. Um die Stößelstange 18 herum befindet sich eine Rückholfeder 22, die nach Niederdrücken des Auslöseelements 20 in Richtung der Pfeile 24 das Auslöseelement 20 und das Stößelelement 16 wieder in Richtung der Pfeile 26 zurück in die Ausgangsposition gemäß Fig. 1 bewegt. Hierdurch bewegt sich das Stößelelement 16 auf und ab, um einen bei 28 angedeuteten Rohrhalter in eine Wärmedämmschicht 30 hineinzutreiben, wie es bei Tackergeräten für Fußbodenheizungen grundsätzlich bekannt ist. Die Rohrhalter 28 befinden sich in einem bei 32 angedeuteten Magazin und werden automatisch (beispielsweise durch Gewichtskraft oder durch Federkraft bzw, durch eine motorische Kraft) nachgeführt.

Wie anhand von Fig. 1 ferner zu erkennen ist, befindet sich an der Montageplatte 12 ein Schuhhalteelement 34, an dem ein Schuh 36 befestigbar ist bzw, mit dem ein Schuh 36 lösbar verbindbar ist (beispielsweise über Riemen o.dgl. Schuhaufnahmeelemente, wie sie beispielsweise von Ski- bzw. Snowboard-Bindungen her bekannt sind).

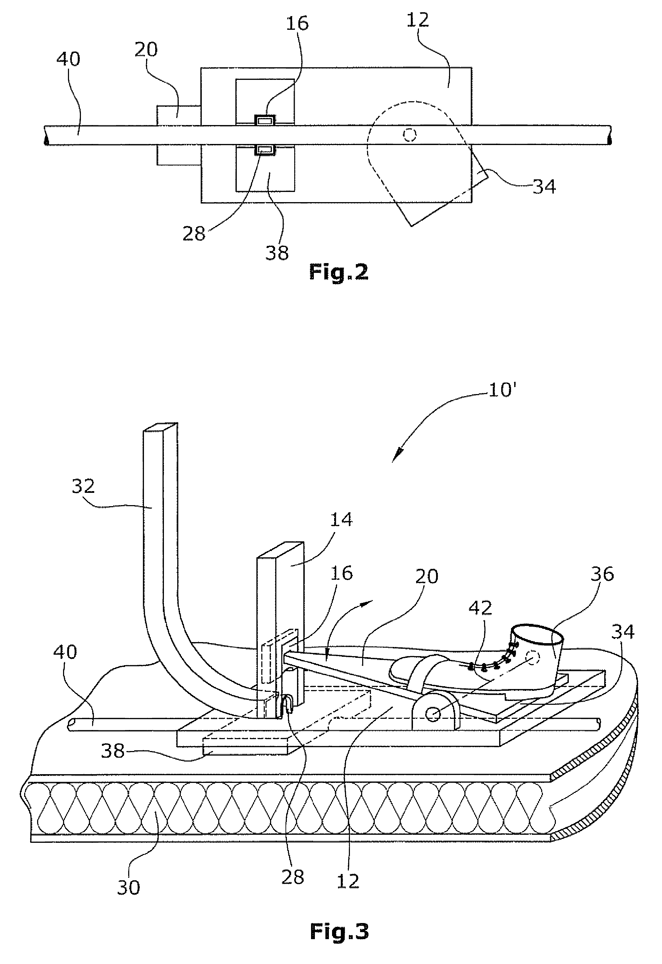

Durch das Schuhhalteelement 34 ist es möglich, das gesamte Tackergerät 10 mit Hilfe eines Fußes zu führen und zu halten. Die Unterseite der Montageplatte 12 ist, wie in Fig. 2 gezeigt, mit einem Rohrführungselement 38 versehen, das auf ein zu verlegendes Rohr 40 aufgesetzt wird, was durch entsprechende Bewegung des Schuhs 36 bzw. des Fußes einer Bedienperson erfolgt. Mit dem zweiten Fuß bzw. Schuh der Bedienperson kann diese nun das fußpedalähnliche Auslöseelement 20 niederdrücken, um das auf der Wärmedämmschicht 30 liegende Rohr 40 zu fixieren.

Die gesamte Bedienung der Vorrichtung 10 erfolgt durch die Füße der Bedienperson, die dadurch ihre Hände frei hat, um damit das zu verlegende Rohr 40 zu führen. Mit Hilfe des erfindungsgemäßen Fuß-Tackergeräts 10 ist also eine Ein-Personen-Rohrverlegung und -Fixierung möglich.

Fig. 3 zeigt eine alternativ ausgebildete Vorrichtung 10', wobei diejenigen Elemente der Vorrichtung 10', die konstruktiv bzw. funktional den Elementen der Vorrichtung 10 gemäß der Fign. 1 und 2 gleichen bzw. diesen entsprechen, mit den gleichen Bezugszeichen versehen sind.

Mit Ausnahme der Ausbildung des Auslöseelements 20 der Vorrichtung 10' sind beide Vorrichtungen 10 und 10' im wesentlichen baugleich. Das Auslöseelement 20 ist in dem Ausführungsbeispiel gemäß Fig. 3 zugleich auch Schuhhalteelement. Das Schuhhalteelement 34 ist dabei um eine Schwenkachse 42 schwenkbar an der Montageplatte 12 gelagert, so dass durch Niederbewegen des die Vorrichtung 10' haltenden Schuhs 36 das Bewegen des Stößelelements 16 zum Eintreiben eines Rohrhalters 28 in die Wärmedämmschicht 30 erfolgt.

Mit der Vorrichtung 10' gemäß Fig. 3 ist also eine Ein-Fuß-Führung und -Betätigung möglich. Der zweite Fuß dient also während der gesamten Bedienung der Vorrichtung 10' als Standfuß, was der Bedienperson eine erhöhte Standsicherheit verleiht.

## Patentansprüche

1. Vorrichtung zum Eintreiben von Haltern für ein Flächenheizungsrohr, insbesondere Fußbodenheizungsrohr in eine Wärmedämmschicht, mit
- einem Stößelelement (16) zum Eintreiben eines Rohrhalters (28) in die Wärmedämmschicht (30),
- einem Auslöseelement (20) zur Aktivierung des Stößelelements (16) mit einem Fuß,
- einem Magazin (32) für Rohrhalter (28),
- einem Montageelement (12), an dem das Stößelelement (16) geführt ist und das Auslöseelement (20) sowie das Magazin (32) angeordnet sind und das ein Rohrführungselement (38) zum Führen des Montageelements (12) an einem zu verlegenden Rohr (40) aufweist, und
- einem mit dem Montageelement (12) lösbar verbindbaren oder an dem Montageelement (12) angeordneten Schuhhalteelement (34) zum Halten des Montageelements (12) an einem Schuh (36) einer Person.

2. Vorrichtung nach Anspruch 1, **dadurch gekennzeichnet, dass** das Auslöseelement (20) ein Fußpedal zur Betätigung mittels des das Montageelement (12) nicht haltenden freien Schuhs der Person aufweist.

3. Vorrichtung nach Anspruch 1, **dadurch gekennzeichnet, dass** das Auslöseelement (20) mittels des das Montageelement (12) haltenden Schuhs (36) der Person betätigbar ist.

4. Vorrichtung nach einem der Ansprüche 1 bis 3, **dadurch gekennzeichnet, dass** das Auslöseelement (20) mit dem Stößelelement (16) zur Bewegung des Stößelelements (16) zwecks Eintreibens des Rohrhalters (28) in die Wärmedämmschicht (30) verbunden oder gekoppelt ist.

5. Vorrichtung nach einem der Ansprüche 1 bis 4, **dadurch gekennzeichnet, dass** das Magazin (32) vor, neben oder unter dem Montageelement (12) und/oder dem Schuhhalteelement (34) angeordnet ist.

6. Vorrichtung nach einem der Ansprüche 1 bis 5, **dadurch gekennzeichnet, dass** das Auslöseelement (20) über mindestens einen Hebel durch Niederdrücken des Schuhhalteelements (34) aktivierbar ist.

7. Vorrichtung nach einem der Ansprüche 1 bis 5, **gekennzeichnet durch** eine Antriebseinheit zum automatischen Bewegen des Stößelelements (16) zwecks Eintreibens des Rohrhalters (28) in die Wärmedämmschicht (30), wobei die Antriebseinheit **durch** Betätigung des Auslöseelements (20) auslösbar ist.

8. Vorrichtung nach einem der Ansprüche 1 bis 7, **dadurch gekennzeichnet, dass** das Rohrführungselement (38) an der Unterseite des Montageelements (12) oder seitlich von diesem angeordnet ist.

9. Vorrichtung nach einem der Ansprüche 1 bis 8, **dadurch gekennzeichnet, dass** sich das Schuhhalteelement (34) oberseitig oder seitlich des Montageelements (12) befindet.
